# EUROPÄISCHE PATENTSCHRIFT

(11) **EP 3 376 328 B1**
(45) Veröffentlichungstag und Bekanntmachung des Hinweises auf die Patenterteilung: **26.08.2020**
(21) Anmeldenummer: 18161037.9
(22) Anmeldetag: 09.03.2018
(51) Int. Cl.: G05D 1/00

(54) **VERFAHREN ZUM AUTOMATISCHEN BETRIEB EINES SICH SELBSTTÄTIG FORTBEWEGENDEN BODENBEARBEITUNGSGERÄTES**
METHOD FOR AUTOMATICALLY OPERATING A MOVING SOIL-WORKING IMPLEMENT
PROCÉDÉ DE FONCTIONNEMENT AUTOMATIQUE D'UN APPAREIL MOBILE DE TRAITEMENT DU SOL

(30) Priorität: 16.03.2017 DE 102017105724
(43) Veröffentlichungstag der Anmeldung: 19.09.2018
(73) Patentinhaber: Vorwerk & Co. Interholding GmbH, 42275 Wuppertal (DE)
(72) Erfinder: Ortmann, Roman, 47057 Duisburg (DE); Isenberg, Gerhard, 50668 Köln (DE)
(74) Vertreter: Müller, Enno

(56) Entgegenhaltungen:
- EP-A1- 2 870 853
- US-A1- 2003 216 834
- US-A1- 2013 056 032

## Beschreibung

### Gebiet der Technik

Die Erfindung betrifft ein Verfahren zum Betrieb eines sich selbsttätig fortbewegenden Bodenbearbeitungsgerätes, wobei eine Aufnahmeeinrichtung des Bodenbearbeitungsgerätes eine einen Zeitraum betreffende Aufnahme einer Umgebung des Bodenbearbeitungsgerätes aufnimmt, wobei die Aufnahme gespeichert und einem Nutzer des Bodenbearbeitungsgerätes auf einem Display angezeigt wird, wobei aus der gespeicherten Aufnahme im Falle eines definierten Umgebungsergebnisses und / oder Gerätezustandes des Bodenbearbeitungsgerätes nachträglich eine zeitlich definierte Teilsequenz extrahiert und auf dem Display angezeigt wird.

Des Weiteren betrifft die Erfindung ein sich selbsttätig fortbewegendes Bodenbearbeitungsgerät mit einer Aufnahmeeinrichtung zum Aufnehmen einer einen Zeitraum betreffenden Aufnahme einer Umgebung des Bodenbearbeitungsgerätes und mit einer Auswerte- und Steuereinrichtung zur Speicherung der Aufnahme, wobei die Auswerte- und Steuereinrichtung ausgebildet ist, im Falle eines definierten Umgebungsereignisses und / oder Gerätezustandes des Bodenbearbeitungsgerätes nachträglich eine zeitlich definierte Teilsequenz aus der Aufnahme der Umgebung zu extrahieren und auf einem Display anzuzeigen.

### Stand der Technik

Bodenbearbeitungsgeräte und Verfahren zum Betrieb dieser sind im Stand der Technik bekannt. Die Aufnahmeeinrichtung des Bodenbearbeitungsgerätes ist bspw. eine Kamera, welche Bildfolgen und/oder Videos der Umgebung des Bodenbearbeitungsgerätes aufnimmt. Die Aufnahmen werden bspw. auf einem Display des Bodenbearbeitungsgerätes oder auch eines externen Gerätes, wie bspw. einem PC oder einem Mobilgerät, angezeigt.

Die Druckschrift WO 01/84260 A2 offenbart bspw. einen mobilen Roboter mit einer intuitiven Nutzerschnittstelle zur Fernsteuerung des Roboters. Mittels eines Touch-Displays kann der Nutzer einen Zielbereich innerhalb der Umgebung angeben, an welchen der mobile Roboter verfahren soll. Der mobile Roboter verfügt zur Aufnahme der Umgebung über eine Kamera.

Des Weiteren offenbart die Druckschrift WO 2015/183005 A1 ein mobiles Reinigungsgerät mit einer Bilderfassungseinrichtung und einem Display zum Darstellen einer Aufnahme der Bilderfassungseinrichtung, wobei das Display eine Berührung detektieren kann und eine Steuereinrichtung abhängig von der detektierten Berührung eine Bewegung des mobilen Gerätes zu einem ausgewählten Ort steuert.

Bei dem Betrieb derartiger mobiler Geräte kann es vorkommen, dass sich diese in der Umgebung festfahren, bspw. zwischen Hindernissen verklemmt werden und sich ohne Zutun des Nutzers nicht mehr selbsttätig aus der Situation befreien können.

Daher ist es des Weiteren beispielweise aus der EP 2 870 853 A1 bekannt, dass ein autonomer Roboter im Falle eines Festfahrens an einem Hindernis ein Bild oder Bilder zusammen mit einer Nachricht, die die Situation des Roboters beschreibt, an einen Nutzer übermittelt, so dass dieser eine aktuelle Situation des Fehlerzustandes des Roboters verstehen kann.

### Zusammenfassung der Erfindung

Ausgehend von dem vorgenannten Stand der Technik ist es Aufgabe der Erfindung, ein Verfahren zum Betrieb eines sich selbsttätig fortbewegenden Bodenbearbeitungsgerätes zu schaffen, bei welchem das Verständnis über einen Fehlerzustand des Bodenbearbeitungsgerätes, wie bspw. bei einem Festfahren innerhalb der Umgebung, noch weiter verbessert ist.

Zur Lösung der vorgenannten Aufgabe wird mit der Erfindung vorgeschlagen, dass die extrahierte Teilsequenz einen bestimmten Zeitabschnitt vor Auftreten eines Fehlerzustandes des Bodenbearbeitungsgerätes enthält, um Informationen darüber zu erlangen, welcher Situation das Bodenbearbeitungsgerät vor einem Fehlerfall ausgesetzt war.

Gemäß der Erfindung wird nun über einen Zeitraum eine Bildfolge aus mehreren Bildern und/oder ein Video aufgenommen, welche die Umgebung des Bodenbearbeitungsgerätes während bspw. einer Fortbewegung des Bodenbearbeitungsgerätes zeigen. Die Bildfolge und/oder das Video werden gespeichert und im Bedarfsfall zur Beurteilung eines Fehlerzustandes des Bodenbearbeitungsgerätes herangezogen, um Informationen darüber zu erlangen, welcher Situation das Bodenbearbeitungsgerät vor einem Fehlerfall ausgesetzt war. Zu diesem Zweck wird aus der gespeicherten Aufnahme eine Teilsequenz extrahiert, welche einen bestimmten Zeitabschnitt vor Auftreten des Fehlerzustandes enthält. Diese Teilsequenz wird auf einem Display angezeigt, sodass der Nutzer den Zeitabschnitt vor Auftreten des Fehlers betrachten und ggf. analysieren kann, um den Fehlerzustand zu beheben. Bspw. kann es vorkommen, dass sich das Bodenbearbeitungsgerät, bspw. ein Haushaltsroboter, während einer Arbeitsfahrt festfährt, bspw. unter einem Möbelstück, wie einem Bett, einem Sofa, einer Kommode oder dergleichen, auf einer Schwelle oder in einer durch Hindernisse nur schwer zugänglichen Stelle. Die Aufnahmeeinrichtung des Bodenbearbeitungsgerätes, insbesondere eine Kamera, nimmt während der Arbeitsfahrt, vorzugsweise in Fahrtrichtung, Aufnahmen von der Umgebung des Bodenbearbeitungsgerätes auf. Dies können einzelne Bilder sein, welche dann zu einer Bildfolge zusammengesetzt werden, oder ein Video. Die Aufnahme wird in einem Speicherbereich innerhalb des Roboters, auf einem Internetserver oder auf einem über ein kabelloses Netzwerk erreichbaren speicherfähigen Gerät, gespeichert, wobei die Aufnahmen vorzugsweise regelmäßig überschrieben oder gelöscht werden, um die benötigte Speicherkapazität zu reduzieren. Wichtig ist, dass zumindest Aufnahmen von einer Zeitspanne existieren, welche einen Aufschluss über das Entstehen eines Fehlerzustandes des Bodenbearbeitungsgerätes zulässt. Sofern ein Fehlerfall auftritt, wird eine zeitlich definierte Teilsequenz der Aufnahme extrahiert und auf dem Display angezeigt, sodass ein Nutzer des Bodenbearbeitungsgerätes einen optischen Eindruck von der Situation des Bodenbearbeitungsgerätes kurz vor Auftreten des Fehlerfalls erhält. Dadurch hat der Nutzer die Möglichkeit, den Betrieb des Bodenbearbeitungsgerätes, insbesondere auch dessen Fortbewegung, auszuwerten und eine Kenntnis über die Ursache für den Fehlerfall zu erlangen. Es ist nicht erforderlich, dass der Nutzer das Bodenbearbeitungsgerät während des Betriebs ständig überwacht, vielmehr kann er sich gezielt, d.h. wenn tatsächlich ein Fehlerfall vorliegt, über die vorausgegangene Situation informieren. Die zeitlich definierte Teilsequenz kann bspw. einen Zeitabschnitt von bis zu 60 Sekunden vor Auftreten des Fehlerfalls umfassen, sodass der Nutzer eine Information darüber erlangt, was in den letzten 60 Sekunden vor Eintritt des Fehlerfalls passiert ist. Dadurch kann der Nutzer bspw. erfahren, wie das Bodenbearbeitungsgerät in eine Situation gelangt ist, die schließlich zu einem Festfahren zwischen Hindernissen führte. Selbstverständlich sind auch längere bzw. zeitlich ältere Teilsequenzen extrahierbar.

Der definierte Gerätezustand, im Einzelfall auch ein definiertes Umgebungsereignis, ist insbesondere dann gegeben, wenn entgegen der vorgesehenen selbsttätigen Fortbewegung eine Unterbrechung oder ein Abbruch der Fortbewegung des Bodenbearbeitungsgerätes eintritt. Das sich selbsttätig fortbewegende Bodenbearbeitungsgerät folgt üblicherweise einem vorberechneten Weg, der etwa aufgrund von einer gespeicherten Karte oder von einer Erfassung der Umgebung berechnet ist. Es ist aber auch möglich, dass die Fortbewegung ohne einen vorberechneten Weg erfolgt, bspw. durch eine Fortbewegung bis eine Erfassung eines oder eine Kollision mit einem nächsten Hindernis eintritt, woraufhin bspw. ein routinemäßiges Zurückverfahren erfolgen kann und/oder eine Drehung des Gerätes um dann eine neue Vorwärtsbewegung auszulösen.

Hierbei können eine Vielzahl von unterschiedlichen Ereignissen oder Gegebenheiten den genannten definierten Gerätezustand bilden. Auch kann das Bodenbearbeitungsgerät sich nicht mehr weiter fortbewegen, weil die Räder keine Kraft mehr auf den Boden übertragen können. Bspw. kann dies eintreten, wenn keine ausreichende Reibung mehr gegeben ist oder ein Antriebsrad bzw. ggf. mehrere Antriebsräder frei drehen, also keine Bodenhaftung mehr haben. Es kann auch der Fall gegeben sein, dass das Bodenbearbeitungsgerät wegen einem Verfangen in einem Hindernis wie etwa in Teppichfransen sich nicht mehr fortbewegen kann oder eine gegenüber der vorgesehenen Fortbewegung deutlich abweichende Fortbewegung vornimmt. Auch eine deutlich abweichende Fortbewegung kann ein Gerätezustand sein, der nachträglich durch die zeitlich definierte Teilsequenz extrahiert und auf dem Display angezeigt werden kann. Allgemeiner gesehen kann es ein von außerhalb oder innerhalb des Bodenbearbeitungsgerätes einwirkender Umstand sein, der eine regelmäßige Fortsetzung des programmgemäßen Verhaltens des Bodenbearbeitungsgerätes verhindert.

Das definierte Umgebungsereignis und/oder der Gerätezustand kann insbesondere ein Einklemmen des Bodenbearbeitungsgerätes in der Umgebung, ein Blockieren eines Antriebsrades des Bodenbearbeitungsgerätes, ein Batteriestatus unterhalb eines definierten Mindestwertes und/oder ein fehlerhafter Softwarestatus sein. Sobald eine Auswerte- und Steuereinrichtung des Bodenbearbeitungsgerätes ein solches Umgebungsereignis und/oder einen solchen Gerätezustand detektiert, wird die Extraktion der zeitlich definierten Teilsequenz eingeleitet und die Teilsequenz der Aufnahme auf dem Display zur Anzeige an den Nutzer bereitgestellt. Neben den vorgenannten Umgebungsereignissen bzw. Gerätezuständen sind selbstverständlich auch andere denkbar, welche einen reibungslosen und automatischen Betrieb des Bodenbearbeitungsgerätes behindern. Durch die Anzeige der Teilsequenz der Aufnahme kann der Nutzer eine Information darüber erlangen, wie es zu dem Einklemmen des Bodenbearbeitungsgerätes in der Umgebung, bspw. zwischen Hindernissen, gekommen ist, warum ein Antriebsrad des Bodenbearbeitungsgerätes blockiert ist, warum der Batteriestatus bspw. unerwartet früh einen zu geringen Ladezustand aufweist und/oder wie sich ein fehlerhafter Softwarestatus während des Betriebs des Bodenbearbeitungsgerätes äußert. Die definierten Umgebungsereignisse bzw. Gerätezustände, welche zur Anzeige einer Teilsequenz auf dem Display führen, können entweder von einem Nutzer des Bodenbearbeitungsgerätes definiert werden oder sind der Steuer- und Auswerteeinrichtung des Bodenbearbeitungsgerätes herstellerseitig vorgegeben. Bei den Gerätezuständen kann bspw. auch ein Zustand eines Bodenbearbeitungselementes oder sonstigen Zubehörs des Bodenbearbeitungsgerätes definiert sein, bspw. ein blockierter Zustand einer Reinigungsbürste, ein blockierter Zustand eines Verfahrrades, ein nicht mehr funktionsfähiger Sensor, eine Beschädigung eines Gehäuseteils oder dergleichen.

Es wird vorgeschlagen, dass die Teilsequenz auf einem Display eines externen mobilen Gerätes angezeigt wird. Das externe Gerät kann bspw. ein Mobiltelefon, ein Laptop, ein Tablet-PC, ein lokaler Rechner oder dergleichen sein. Die Teilsequenz wird somit nicht auf einem eigenen Display des Bodenbearbeitungsgerätes angezeigt, sondern vorzugsweise entfernt von dem Bodenbearbeitungsgerät auf einem anderen Gerät des Nutzers. Vorzugsweise kann mit diesem externen Gerät gleichzeitig auch eine Fernsteuerung des Bodenbearbeitungsgerätes durchgeführt werden. Durch die Anzeige auf dem externen Gerät ist es dem Nutzer des Bodenbearbeitungsgerätes möglich, eine Information über den aktuellen Zustand bzw. den Grund für das Auftreten eines Fehlerzustandes auch dann zu erhalten, wenn er sich aktuell nicht in der Umgebung des Bodenbearbeitungsgerätes befindet. Die Übermittlung der Teilsequenz von dem Bodenbearbeitungsgerät an das externe Gerät kann dabei vorzugsweise mittels WLAN, Bluetooth, ZigBee oder dergleichen erfolgen. Falls sich das externe mobile Gerät nicht in dem gleichen Heimnetzwerk befindet wie das Bodenbearbeitungsgerät, kann zusätzlich auch eine Übermittlung über das Internet, vorzugsweise auch über einen Server des Herstellers des Bodenbearbeitungsgerätes, erfolgen. Um die Teilsequenz auf dem Display des externen mobilen Gerätes anzeigen zu können, empfiehlt es sich, dass auf dem externen mobilen Gerät eine Applikation installiert ist, welche ein gezieltes Abrufen der Teilsequenz ermöglicht. Dabei kann die App vorzugsweise so eingestellt sein, dass der Nutzer wahlweise manuell nach Wunsch eine Anzeige einer Teilsequenz auslösen kann oder stets automatisch eine Teilsequenz angezeigt bekommt, wenn es zu einem Fehlerfall des Bodenbearbeitungsgerätes gekommen ist. Im erstgenannten Fall wird der Nutzer über die App des externen mobilen Gerätes über das Auftreten eines Fehlerzustandes informiert. Danach kann der Nutzer dann entscheiden, ob er die Teilsequenz auf dem Display angezeigt bekommen möchte oder nicht. Zur Anzeige hat der Nutzer bspw. eine Anforderung auf dem externen mobilen Gerät zu tätigen, bspw. durch Drücken einer Schaltfläche auf einem Touchscreen des Displays.

Es wird vorgeschlagen, dass der Nutzer das Bodenbearbeitungsgerät nach der Anzeige der Teilsequenz manuell fernsteuert. Nachdem sich der Nutzer über das Umgebungsereignis bzw. den Gerätezustand des Bodenbearbeitungsgerätes informiert hat, insbesondere darüber, was zu dem Umgebungsereignis bzw. dem Gerätezustand geführt hat, steuert der Nutzer das Bodenbearbeitungsgerätes manuell, um das Umgebungsereignis bzw. den Gerätezustand zu beseitigen bzw. so abzuändern, dass ein ungestörter Betrieb des Bodenbearbeitungsgerätes möglich ist. Die Fernsteuerung erfolgt dabei vorzugsweise über das vorgenannte externe Gerät, insbesondere ein Mobilgerät des Nutzers, auf welchem eine App installiert ist, die auch eine Fernsteuerungsfunktion beinhaltet. Mittels der manuellen Fernsteuerung kann der Nutzer das Bodenbearbeitungsgerät aus einer festgefahrenen Situation befreien, zu einer Ladestation fahren oder dergleichen. Zum Ausüben einer manuellen Fernsteuerung kann der Nutzer auf dem mobilen Gerät bspw. eine Fernsteuerungsfunktion initiieren. Alternativ kann es auch möglich sein, dass unmittelbar bei und/oder nach der Anzeige der Teilsequenz eine manuelle Fernsteuerung freigeschaltet wird.

Es wird vorgeschlagen, dass auf dem Display mehrere Handlungsoptionen für eine Reaktion auf das Umgebungsereignis und/oder den Gerätezustand angezeigt werden, wobei der Nutzer anschließend mindestens eine Handlungsoption auswählt. Der Nutzer bekommt somit Handlungsoptionen vorgeschlagen, welche zur Beseitigung des Umgebungsereignisses bzw. des Gerätezustandes geeignet sind. Bspw. kann die Handlungsoption eine Bewegung, Funktion oder Tätigkeit des Bearbeitungsgerätes beinhalten, welche das Bearbeitungsgerät aus einer festgefahrenen Situation innerhalb der Umgebung befreit, einen Ladevorgang eines Akkumulators des Bodenbearbeitungsgerätes herbeiführt, ein Hindernis beseitigt oder dergleichen. Die Handlungsoptionen können auf dem Display des Bodenbearbeitungsgerätes und/oder eines externen Gerätes angezeigt werden. Insbesondere kann der Nutzer auf dem Display eine Schaltfläche anklicken, um eine entsprechende Handlung auszuführen. Angezeigte Handlungsoptionen, welche der Nutzer auf dem Display auswählen kann, sind bspw. "Manuelle Steuerung des Bodenbearbeitungsgerätes", "Deaktivierung eines Stoßsensors", "Bürste absenken", "Reinigung fortsetzen", "Fehler löschen" und dergleichen.

Es wird vorgeschlagen, dass der Nutzer als Reaktion auf die angezeigte Teilsequenz eine Geräteaktion des Bodenbearbeitungsgerätes steuert. Dabei kann der Nutzer bspw. eine Fahrbewegung des Bodenbearbeitungsgerätes fernsteuern, einen Sensor des Bodenbearbeitungsgerätes und/oder einen externen Sensor aktivieren und/oder deaktivieren, eine Bodenbearbeitungseinrichtung des Bodenbearbeitungsgerätes aktivieren und dergleichen. Die Möglichkeiten der Steuerung des Bodenbearbeitungsgerätes durch den Nutzer umfassen somit nicht nur reine Fahrfunktionen des Bodenbearbeitungsgerätes, sondern auch Einflussmöglichkeiten auf Sensoren und/oder Bodenbearbeitungseinrichtungen wie bspw. Bürsten und dergleichen, deren Einsatz oder auch Nicht-Einsatz eine für den jeweiligen Fall unterstützende Wirkung haben kann. Der Nutzer kann sich zunächst die angezeigte Teilsequenz ansehen, um das Umgebungsereignis und/oder den Gerätezustand nachzuvollziehen. Anschließend kann der Nutzer das Bodenbearbeitungsgerät in einen Korrektur-Modus schalten, in welchem er das Bodenbearbeitungsgerät manuell steuern kann. Die Steuerung kann dabei beinhalten, dass Hindernisse mittels des Bodenbearbeitungsgerätes verschoben werden, wozu vorzugsweise Stoßsensoren des Bodenbearbeitungsgerätes deaktiviert werden und Absturzsensoren aktiviert werden, sodass das Bodenbearbeitungsgerät gegen das störende Hindernis verfahren kann, um dieses innerhalb der Umgebung zu verschieben. Darüber hinaus kann eine Bodenbearbeitungseinrichtung entgegen ihres üblichen Einsatzzweckes verwendet werden. Bspw. kann eine Bürste des Bodenbearbeitungsgerätes langsam entgegengesetzt einer üblichen Richtung während eines Bodenbearbeitungsbetriebs gedreht werden, sodass sich das Bodenbearbeitungsgerät aus einer eingeklemmten Stellung befreien kann. Eventuell kann ein Verklemmen des Bodenbearbeitungsgerätes dabei auch über einen an einem Antrieb der Bürste gemessenen Strom erkannt werden. Des Weiteren kann das Bodenbearbeitungsgerät so gesteuert werden, dass dieses entgegen seiner bisherigen Verfahrrichtung rückwärts fährt, obwohl der aktuelle Detektionsbereich der Aufnahmeeinrichtung oder eines sonstigen Sensors, eine solche Rückwärtsfahrt üblicherweise nicht erlauben würde. Dabei kann zusätzlich ein anderer Sensor, bspw. ein Abstandssensor und/oder eine Kamera, in einem Heckbereich des Bodenbearbeitungsgerätes eingeschaltet werden. Des Weiteren kann auch vorgesehen sein, dass das Bodenbearbeitungsgerät mit einem externen Sensor gekoppelt wird, welcher in der Umgebung des Bodenbearbeitungsgerätes vorhanden ist. Dieser Sensor kann bspw. eine externe Kamera sein, welche zum Zwecke einer Raumüberwachung in der Umgebung installiert ist.

Des Weiteren kann vorgesehen sein, dass die Fernsteuerung des Bodenbearbeitungsgerätes über eine Applikation eines externen Gerätes freigegeben werden muss. Dabei werden die Applikation und das Bodenbearbeitungsgerät anhand beliebiger Schlüssel gekoppelt, sodass nur diese beiden Geräte miteinander kommunizieren dürfen. Die Übertragung der anzuzeigenden Teilsequenz der Aufnahme geschieht vorzugsweise verschlüsselt. Darüber hinaus ist der Datenkommunikationsdienst zusätzlich zur vorherigen Kopplung mit einem Passwort geschützt, bspw. einer Touch-ID, sodass bei Verlust eines dieser Geräte der Datenkommunikationsdienst nicht genutzt werden kann. Der Hersteller des Bodenbearbeitungsgerätes oder dritte Personen haben dabei grundsätzlich keine Möglichkeit, die Anzeigefunktion zur Anzeige der Teilsequenz zu nutzen.

Es kann vorgesehen sein, dass während der Ausführung einer Geräteaktion eine Aufnahme mittels der Aufnahmeeinrichtung aufgenommen wird und/oder die Umgebung beleuchtet wird. Während der Steuerung des Bodenbearbeitungsgerätes zum Beseitigen des Umgebungsereignisses bzw. des fehlerhaften Gerätezustandes kann der Nutzer das Bodenbearbeitungsgerät mit Hilfe einer Echtzeit-Aufnahme der Umgebung beobachten und die Geräteaktion steuern. Zusätzlich kann die Umgebung dabei beleuchtet werden, sodass die Aufnahme optimal gelingt. Hierzu kann bspw. eine LED oder ein sonstiges Beleuchtungsmittel des Bodenbearbeitungsgerätes eingeschaltet werden.

Es wird vorgeschlagen, dass die Aufnahmeeinrichtung Bilder in zeitlichen Abständen von ungefähr 0,1 Sekunde bis 5 Sekunden aufnimmt, wobei die Bilder zu einer Bildfolge zusammengefasst werden, und/oder dass die Aufnahmeeinrichtung eine Video mit einer Bildfrequenz von ungefähr 1 Bild pro Sekunde bis 25 Bildern pro Sekunde aufnimmt. Die Aufnahmeeinrichtung des Bodenbearbeitungsgerätes fertigt somit in vorgegebenen Abständen Aufnahmen von der Umgebung an. In dem Fall, dass es sich bei der Aufnahme um eine Bildfolge handelt, können Bilder vorzugsweise in regelmäßen Abständen von bspw. 0,5 Sekunden, 1 Sekunde, 2 Sekunden, bis hin zu bspw. 5 Sekunden, angefertigt werden, welche anschließend zu einem filmartigen Ablauf miteinander verbunden werden. Alternativ kann es sich bei der Aufnahme um ein Video handeln, dessen Bildfrequenz von ungefähr einem Bild pro Sekunde bis hin zu 25 Bildern je Sekunde reicht. Die angegebenen Zeitabstände für die Bilder einer Bildfolge bzw. die Bildfrequenz des Videos sind hier als vorzugsweise angegeben, wobei selbstverständlich nicht ausgeschlossen ist, dass auch andere zeitliche Abstände bzw. Bildfrequenzen zur Anwendung kommen können. Die vorgenannten zeitlichen Abstände bzw. Bildfrequenzen haben sich in der Praxis jedoch als besonders vorteilhaft herausgestellt, um dem Nutzer - bei vertretbarer benötigter Speicherkapazität - die Situation vor Auftreten eines Fehlerzustandes des Bodenbearbeitungsgerätes in aufschlussreicher Art und Weise darzustellen.

Es wird vorgeschlagen, dass die Aufnahme für einen Zeitraum von mindestens 5 Sekunden bis hin zu 60 Sekunden gespeichert wird. Besonders vorzugsweise wird aus der gespeicherten Aufnahme eine Teilsequenz extrahiert, welche einen Zeitraum von bspw. 5 Sekunden bis hin zu 20 Sekunden vor dem Eintreten des Umgebungsereignisses bzw. des Gerätezustandes umfasst. Die Teilsequenz kann maximal der gespeicherten Zeitspanne der Aufnahme von bspw. bis zu 60 Sekunden entsprechen. Ältere Aufnahmen werden regelmäßig überschrieben bzw. gelöscht, sodass die Speicherkapazität nicht überschritten wird.

Neben den zuvor beschriebenen Verfahren wird mit der Erfindung des Weiteren ein sich selbsttätig fortbewegendes Bodenbearbeitungsgerät mit einer Aufnahmeeinrichtung zum Aufnehmen einer einen Zeitraum betreffenden Aufnahme einer Umgebung des Bodenbearbeitungsgerätes und mit einer Auswerte- und Steuereinrichtung zur Speicherung der Aufnahme vorgeschlagen, wobei die Auswerte- und Steuereinrichtung ausgebildet ist, im Falle eines definierten Umgebungsereignisses und/oder Gerätezustandes des Bodenbearbeitungsgerätes nachträglich eine zeitlich definierte Teilsequenz aus der Aufnahme der Umgebung zu extrahieren und auf einem Display anzuzeigen, wobei die extrahierte Teilsequenz einen bestimmten Zeitabschnitt vor Auftreten eines Fehlerzustandes des Bodenbearbeitungsgerätes enthält, um Informationen darüber zu erlangen, welcher Situation das Bodenbearbeitungsgerät vor einem Fehlerfall ausgesetzt war.

Das erfindungsgemäße sich selbsttätig fortbewegende Bodenbearbeitungsgerät ist dadurch ausgestaltet, ein erfindungsgemäßes zuvor beschriebenes Verfahren auszuführen. Mittels der Aufnahmeeinrichtung kann eine Situation innerhalb der Umgebung des Bodenbearbeitungsgerätes erfasst werden und im Falle eines zuvor definierten Umgebungsereignisses und/oder Gerätezustandes des Bodenbearbeitungsgerätes teilweise extrahiert werden, sodass eine definierte Teilsequenz auf einem Display angezeigt werden kann. Anhand dieser Teilsequenz kann ein Nutzer des Bodenbearbeitungsgerätes den Fehlerzustand des Bodenbearbeitungsgerätes erkennen und beheben, d.h. das Umgebungsereignis beseitigen bzw. den Gerätezustand des Bodenbearbeitungsgerätes verändern, sodass ein hindernis- und/oder fehlerfreier Betrieb des Bodenbearbeitungsgerätes möglich ist. Das Bodenbearbeitungsgerät kann dazu auch in einer Datenkommunikationsverbindung mit einem externen Gerät des Nutzers stehen, im Sinne eines Sets aus einem Bodenbearbeitungsgerät und einem externen Gerät, wobei die Teilsequenz außerhalb des Bodenbearbeitungsgerätes angezeigt werden kann und zudem das externe Gerät benutzt werden kann, um eine Fernsteuerung des Bodenbearbeitungsgerätes durchzuführen. Das Display des externen Gerätes oder auch das Display des Bodenbearbeitungsgerätes kann dabei ausgebildet sein, mehrere Handlungsoptionen für eine Reaktion auf das Umgebungsereignis bzw. den Gerätezustand anzuzeigen. Über einen dargestellten Schaltknopf oder dergleichen kann ein Nutzer eine Handlungsoption auswählen und eine entsprechende Handlung initiieren. Eine Auswerte- und Steuereinrichtung des Bodenbearbeitungsgerätes kann dabei ausgebildet sein, eine Geräteaktion des Bodenbearbeitungsgerätes zu steuern, bspw. eine Fahrbewegung des Bodenbearbeitungsgerätes zu steuern, einen Sensor des Bodenbearbeitungsgerätes und/oder einen externen Sensor zu aktivieren und/oder zu deaktivieren, und/oder eine Bodenbearbeitungseinrichtung, wie bspw. eine Bürste oder dergleichen, des Bodenbearbeitungsgerätes zu aktivieren. Die Aufnahmeeinrichtung ist vorzugsweise ausgebildet, Bilder in zeitlichen Abständen aufzunehmen und/oder ein Video aufzunehmen, sowie diese Aufnahme für eine vorgegebene Zeitspanne zu speichern, sodass eine Teilsequenz daraus extrahiert werden kann.

Im Übrigen gelten für die Ausgestaltung des sich selbsttätig fortbewegenden Bodenbearbeitungsgerätes auch diejenigen Merkmale, welche zuvor in Bezug auf das Verfahren zum Betrieb eines solchen Bodenbearbeitungsgerätes beschrieben wurden.

Bei dem sich selbsttätig fortbewegenden Bodenbearbeitungsgerät kann es sich bspw. um ein Reinigungsgerät wie einen Saugroboter und/oder einen Wischroboter handeln. Des Weiteren sind selbstverständlich auch andere Bodenbearbeitungsgeräte möglich, wie bspw. ein Poliergerät, Schleifgerät, ein Mähroboter oder dergleichen.

### Kurze Beschreibung der Zeichnungen

Im Folgenden wird die Erfindung anhand von Ausführungsbeispielen näher erläutert. Es zeigen:
- Fig. 1: ein erfindungsgemäßes sich selbsttätig fortbewegendes Bodenbearbeitungsgerät,
- Fig. 2: eine Umgebung des Bodenbearbeitungsgerätes während eines ersten Zeitpunktes,
- Fig. 3: die Umgebung des Bodenbearbeitungsgerätes während eines späteren Zeitpunktes,
- Fig. 4: ein externes mobiles Gerät mit einem Display, auf welchem Bilder einer Teilsequenz angezeigt sind,
- Fig. 5: das mobile externe Gerät mit vorgeschlagenen Handlungsoptionen.

### Beschreibung der Ausführungsformen

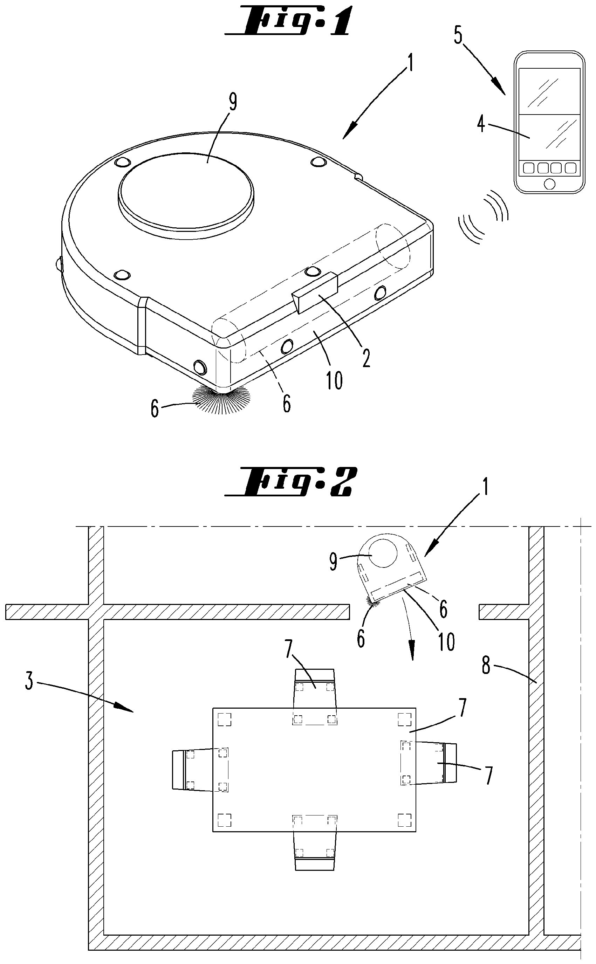

Figur 1 zeigt ein Bodenbearbeitungsgerät 1, welches hier als Saugroboter ausgebildet ist. Das Bodenbearbeitungsgerät 1 verfügt über eine Navigations- und Selbstlokalisierungseinrichtung, mit deren Hilfe sich das Bodenbearbeitungsgerät 1 innerhalb einer Umgebung 3 selbsttätig fortbewegen kann. Die Navigations- und Selbstlokalisierungseinrichtung beinhaltet eine Abstandsmesseinrichtung 9, hier bspw. eine (nicht näher dargestellte) Triangulationsmesseinrichtung, mittels welcher Abstände zu Hindernissen 7 und Wänden 8 innerhalb der Umgebung 3 des Bodenbearbeitungsgerätes 1 gemessen werden können. Zudem beinhaltet die Navigations- und Selbstlokalisierungseinrichtung üblicherweise noch zusätzlich eine Odometrie-Messeinrichtung (nicht dargestellt), welche einem Verfahrrad des Bodenbearbeitungsgerätes 1 zugeordnet ist und eine zurückgelegte Wegstrecke detektiert.

Das dargestellte Bodenbearbeitungsgerät 1 verfügt des Weiteren über mehrere Bodenbearbeitungseinrichtungen 6, welche zur Bearbeitung einer zu reinigenden Fläche dienen, nämlich hier eine Seitenbürste, welche seitlich unter einem Gehäuse des Bodenbearbeitungsgerätes 1 hinausragt und insbesondere zur Reinigung von Übergängen zwischen einer Fläche und einer Wand 8 der Umgebung 3 dient, sowie eine als Borstenwalze ausgebildete Bodenbearbeitungseinrichtung 6, welche sich unterhalb des Bodenbearbeitungsgerätes 1 befindet (gestrichelt dargestellt) und zur Einwirkung auf eine zu reinigende Fläche dient. Das Bodenbearbeitungsgerät 1 verfügt des Weiteren über eine Aufnahmeeinrichtung 2, welche hier eine Kamera ist, die Bilder in definierten zeitlichen Abständen von der Umgebung 3 aufnehmen kann. Des Weiteren verfügt das Bodenbearbeitungsgerät 1 über einen Stoßfänger 10, welcher entlang eines Umfangteilbereiches des Gehäuses des Bodenbearbeitungsgerätes 1 ausgebildet ist. Der Stoßfänger 10 ist mit einem Kontaktsensor verbunden, welcher Stöße auf den Stoßfänger 10 detektieren kann. Eine nicht dargestellte Steuer- und Auswerteeinrichtung des Bodenbearbeitungsgerätes 1 steuert das Bodenbearbeitungsgerät 1 so innerhalb der Umgebung 3, dass eine Bodenbearbeitungstätigkeit, hier eine Reinigung einer Bodenfläche, ausgeführt werden kann. Des Weiteren steuert die Steuer- und Auswerteeinrichtung ebenfalls die Aufnahmeeinrichtung 2, die Bodenbearbeitungseinrichtung 6 sowie die Abstandsmesseinrichtung 9.

Das Bodenbearbeitungsgerät 1 weist eine Datenkommunikationsverbindung zu einem externen mobilen Gerät 5 auf, welches hier ein Smartphone ist. Das mobile Gerät 5 verfügt über ein Display 4, welches ein Touchscreen ist. Das Bodenbearbeitungsgerät 1 und das mobile Gerät 5 weisen hier eine Funkverbindung zueinander auf. Bspw. sind das mobile Gerät 5 und das Bodenbearbeitungsgerät 1 Teilnehmer eines Heimnetzwerkes des Nutzers.

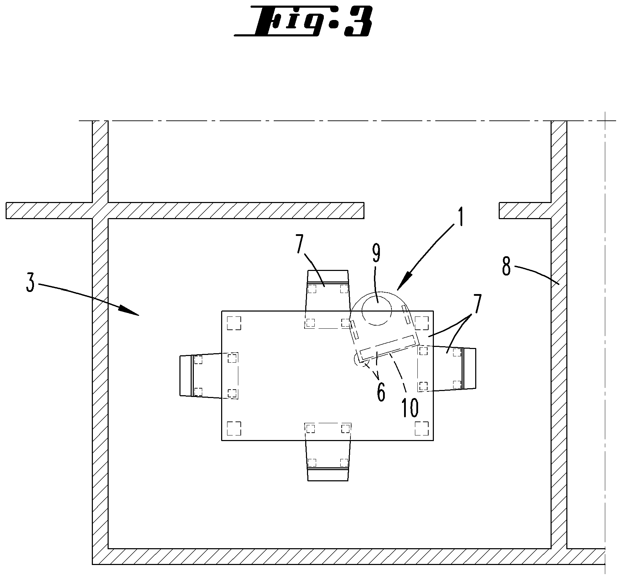

Die Figuren 2 und 3 zeigen zu zwei verschiedenen Zeitpunkten eine Raumsituation einer Umgebung 3, in welcher sich das Bodenbearbeitungsgerät 1 befindet. Die Umgebung 3 weist eine Mehrzahl von Hindernissen 7 auf, sowie die Umgebung 3 begrenzende Wände 8. Die Hindernisse 7 beinhalten hier bspw. eine Sitzgruppe mit einem Tisch und vier Stühlen.

Gemäß der in Figur 2 dargestellten Situation fährt das Bodenbearbeitungsgerät 1 in einen Raum der Umgebung 3 hinein und steuert auf die Hindernisse 7 zu, um eine Bodenfläche unterhalb des Tisches zu reinigen. Das Bodenbearbeitungsgerät 1 und die Hindernisse 7 sind aus Darstellungsgründen nicht maßstabsgetreu dargestellt, hieraus ergibt sich jedoch keine Einschränkung in Bezug auf die Funktionsweise des dargestellten Verfahrens.

In der in Figur 3 dargestellten Situation hat das Bodenbearbeitungsgerät 1 einen Bereich unterhalb eines Hindernisses 7, nämlich unterhalb des Tisches der Sitzgruppe, erreicht. Dabei stößt das Bodenbearbeitungsgerät 1 gleichzeitig vor mehrere Hindernisse 7, nämlich zwei Stuhlbeine und ein Tischbein. Es kommt zu einem Einklemmen des Bodenbearbeitungsgerätes 1 zwischen diesen Hindernissen 7, aus welchem sich das Bodenbearbeitungsgerät 1 nicht selbst befreien kann. Während des Betriebs des Bodenbearbeitungsgerätes 1 kommt es somit zu einem Fehlerfall, in welchem der Gerätezustand ein eingeklemmter Zustand ist.

Während der Fortbewegung des Bodenbearbeitungsgerätes 1 hat die Aufnahmeeinrichtung 2, d.h. hier die Kamera, des Bodenbearbeitungsgerätes 1 in zeitlichen Abständen von hier bspw. 0,5 Sekunden, Bilder der Umgebung 3 aus der Perspektive des Bodenbearbeitungsgerätes 1 aufgenommen und in einem Speicher hinterlegt. Die Bilder werden hier 30 Sekunden lang innerhalb des Speichers gespeichert und nach Ablauf dieser 30 Sekunden durch neu aufgenommene Bilder überschrieben. Bei dem gemäß Figur 3 vorliegenden eingeklemmten Gerätezustand des Bodenbearbeitungsgerätes 1 übermittelt die Steuer- und Auswerteeinrichtung des Bodenbearbeitungsgerätes 1 eine Nachricht an das mobile Gerät 5 des Nutzers, welche zum einen eine Information über den aktuellen Ort des Bodenbearbeitungsgerätes 1 innerhalb der Umgebung 3 sowie eine Teilsequenz der gespeicherten Bilder beinhaltet. Die Teilsequenz der Aufnahme ist hier auf die letzten 30 Sekunden vor Auftreten des Fehlerfalls beschränkt, d.h. entspricht hier derjenigen Zeitspanne, zu welcher noch Bilder innerhalb des Speichers existieren. Es kann ebenfalls vorgesehen sein, dass eine Teilsequenz definiert ist und extrahiert wird, welche kürzer ist als die maximal zur Verfügung stehende gespeicherte Zeitspanne vor Eintreten des Fehlerfalls. Die Steuer- und Auswerteeinrichtung übermittelt die Bilder an eine auf dem mobilen Gerät 5 installierte App, wo diese zu einer Bildfolge zusammengestellt und dem Nutzer auf dem Display 4 des mobilen Gerätes 5 angezeigt werden. Die Anzeige kann im Fehlerfall entweder automatisch initiiert werden, oder auf Anfrage eines Nutzers erfolgen.

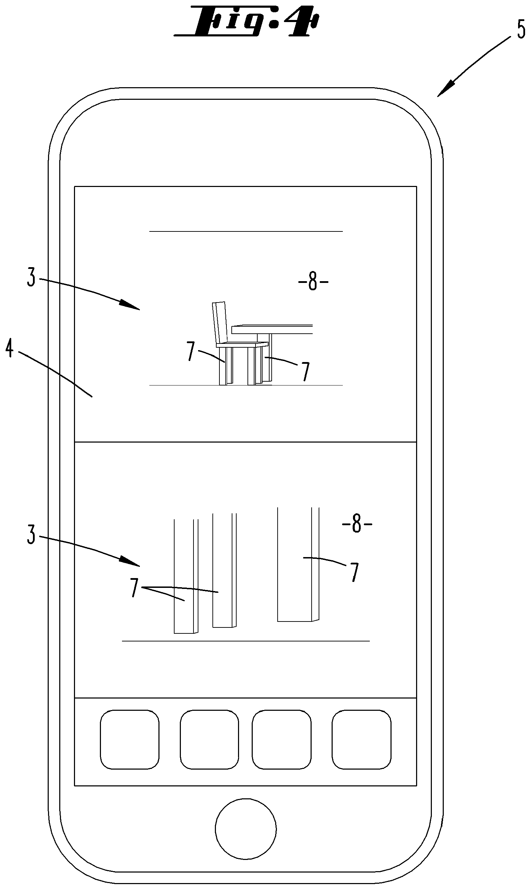

Figur 4 zeigt die beispielhafte Darstellung zweier Bilder einer Bildfolge auf dem Display 4 des mobilen Gerätes 5. Die Bildfolge beinhaltet in der Praxis vorzugsweise eine größere Bildanzahl. Von Vorteil ist alternativ die Darstellung eines aus mehreren Bildern zusammengestellten Videos. Aus der Bildfolge bzw. dem Video erhält der Nutzer des Bodenbearbeitungsgerätes 1 einen Hinweis darauf, wie das Bodenbearbeitungsgerät 1 in die eingeklemmte Situation gelangen konnte. Der Nutzer erhält einen Hinweis über die Fortbewegungsrichtung kurz vor dem Eintreten des Fehlerfalls und die das Bodenbearbeitungsgerät 1 umgebenden Hindernisse 7.

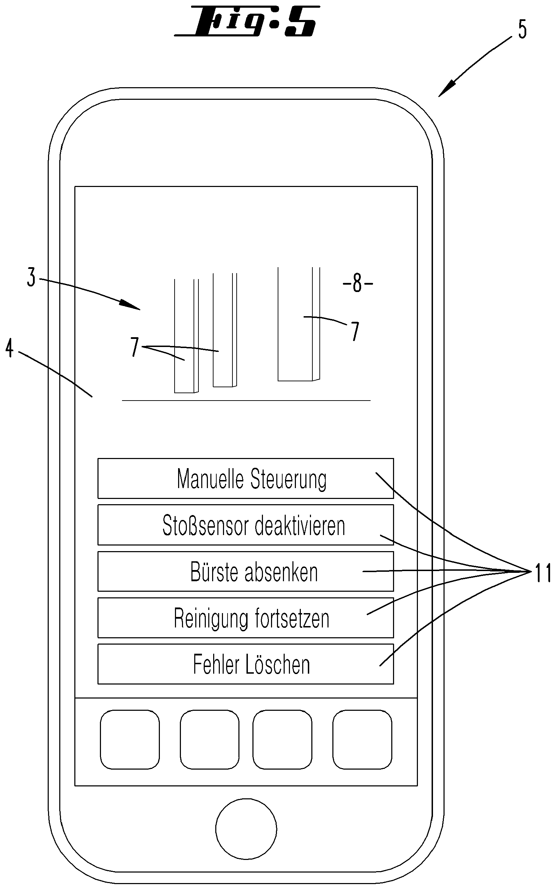

Nachdem die Bildfolge bzw. das Video vollständig abgespielt wurden, werden auf dem Display 4 des mobilen Gerätes 5 mehrere Handlungsoptionen 11 angezeigt. Diese Handlungsoptionen 11 sind in Figur 5 dargestellt. Die Handlungsoptionen 11 beinhalten eine Auswahl von Handlungen, die das Bodenbearbeitungsgerät 1 zum Beheben des Fehlerzustandes ausführen kann. Gemäß Figur 5 werden Handlungsoptionen 11 angezeigt, welche hier nicht beschränkend verstanden werden sollen, sondern lediglich eine mögliche Auswahl beschreiben. Es versteht sich von selbst, dass auch andere Handlungsoptionen 11 möglich sind.

Die Handlungsoptionen 11 beinhalten hier eine manuelle Steuerung des Bodenbearbeitungsgerätes 1, die Deaktivierung eines Stoßsensors des Bodenbearbeitungsgerätes 1, welcher hinter dem Stoßfänger 10 angeordnet ist, das Absenken einer Bodenbearbeitungseinrichtung 6 des Bodenbearbeitungsgerätes 1, nämlich das Absenken einer Bürste, das Fortsetzen des Reinigungsbetriebs mittels des Bodenbearbeitungsgerätes 1 sowie das Löschen des Fehlers aus der Auswerte- und Steuereinrichtung, sodass der Nutzer das Bodenbearbeitungsgerät 1 bspw. manuell aus der festgefahrenen Situation zwischen den Hindernissen 7 befreien und an einen anderen Ort tragen kann.

In diesem Beispiel wählt der Nutzer bspw. die Handlungsoption 11 "Stoßsensor deaktivieren" und "Reinigung fortsetzen". Daraufhin deaktiviert die Steuer- und Auswerteeinrichtung den Stoßsensor des Bodenbearbeitungsgerätes 1 und steuert das Bodenbearbeitungsgerät 1 für einen fortgesetzten Reinigungsvorgang. Das Bodenbearbeitungsgerät 1 verfährt nun gegen die Hindernisse 7, da der dem Stoßfänger 10 zugeordnete Kontaktsensor jedoch deaktiviert ist, nimmt das Bodenbearbeitungsgerät 1 das Hindernis 7 nicht als solches wahr und verfährt in eine Vorwärtsrichtung, wodurch eines der Hindernisse 7, nämlich hier bspw. ein Stuhl, verschoben wird und sich das Bodenbearbeitungsgerät 1 aus der festgefahrenen Situation befreien kann. Die Reinigung wird dann automatisch fortgesetzt, wobei das Bodenbearbeitungsgerät 1 eine von der Navigations- und Selbstlokalisierungseinrichtung festgesetzte Verfahrroute verfolgen kann.

Alternativ zu den zuvor beschriebenen Handlungsoptionen 11 wäre es auch möglich, dass der Nutzer die Handlungsoption 11 "manuelle Steuerung" wählt, wobei auf dem Display 4 des mobilen Gerätes 5 eine Darstellung angezeigt wird, in welcher der Nutzer das Bodenbearbeitungsgerät 1 manuell steuern kann, bspw. durch Bereitstellung von "oben", "unten", "rechts", "links" -Pfeilen, welche der Nutzer auf dem Display 4 betätigen kann. Über diese Pfeile kann der Nutzer das Bodenbearbeitungsgerät 1 bspw. rückwärts aus der eingeklemmten Situation befreien. Während der manuellen Steuerung kann die Aufnahmeeinrichtung 2 vorzugsweise weiterhin Aufnahmen der Umgebung 3 machen. Diese können als Live-Bilder oder Live-Video angezeigt werden. Darüber hinaus kann eine Beleuchtungseinrichtung die Umgebung 3 beleuchten.

Des Weiteren ist es möglich, dass der Nutzer die Handlungsoption 11 "Bürste absenken" wählt, wodurch das Bodenbearbeitungsgerät 1 zu der zu reinigenden Fläche verkippt wird und bezogen auf einen Eckbereich seines Gehäuses an dem Hindernis 7 vorbeigleiten kann, um sich in Vorwärtsrichtung fortzubewegen. Des Weiteren ist es möglich, dass über die Handlungsoption 11 "Fehler löschen" auch einfach eine Fehlernotiz innerhalb der Auswerte- und Steuereinrichtung gelöscht wird. In diesem Fall hebt der Nutzer das Bodenbearbeitungsgerät 1 bspw. aus der verkeilten Situation heraus und setzt dieses auf einer freien Fläche der Umgebung 3 ab.

### Liste der Bezugszeichen

- 1: Bodenbearbeitungsgerät
- 2: Aufnahmeeinrichtung
- 3: Umgebung
- 4: Display
- 5: Mobiles Gerät
- 6: Bodenbearbeitungseinrichtung
- 7: Hindernis
- 8: Wand
- 9: Abstandsmesseinrichtung
- 10: Stoßfänger
- 11: Handlungsoption

## Patentansprüche

1. Verfahren zum Betrieb eines sich selbsttätig fortbewegenden Bodenbearbeitungsgerätes (1), wobei eine Aufnahmeeinrichtung (2) des Bodenbearbeitungsgerätes (1) eine einen Zeitraum betreffende Aufnahme einer Umgebung (3) des Bodenbearbeitungsgerätes (1) aufnimmt, wobei die Aufnahme gespeichert und einem Nutzer des Bodenbearbeitungsgerätes (1) auf einem Display (4) angezeigt wird, wobei aus der gespeicherten Aufnahme im Falle eines definierten Umgebungsereignisses und/oder Gerätezustandes des Bodenbearbeitungsgerätes (1) nachträglich eine zeitlich definierte Teilsequenz extrahiert und auf dem Display (4) angezeigt wird, **dadurch gekennzeichnet, dass** die extrahierte Teilsequenz einen bestimmten Zeitabschnitt vor Auftreten eines Fehlerzustandes des Bodenbearbeitungsgerätes (1) enthält, um Informationen darüber zu erlangen, welcher Situation das Bodenbearbeitungsgerät (1) vor einem Fehlerfall ausgesetzt war.

2. Verfahren nach Anspruch 1, **dadurch gekennzeichnet, dass** der definierte Gerätezustand gegeben ist, wenn entgegen der vorgesehenen selbsttätigen Fortbewegung eine Unterbrechung oder ein Abbruch der Fortbewegung eintritt.

3. Verfahren nach einem der Ansprüche 1 oder 2, **dadurch gekennzeichnet, dass** das definierte Umgebungsereignis und/oder der Gerätezustand ein Einklemmen des Bodenbearbeitungsgerätes (1) in der Umgebung (3), ein Blockieren eines Antriebsrades des Bodenbearbeitungsgerätes (1), ein Batteriestatus unterhalb eines definierten Mindestwertes und/oder ein fehlerhafter Softwarestatus ist.

4. Verfahren nach einem der vorhergehenden Ansprüche, **dadurch gekennzeichnet, dass** die Teilsequenz auf einem Display (4) eines externen mobilen Gerätes (5) angezeigt wird.

5. Verfahren nach einem der vorhergehenden Ansprüche, **dadurch gekennzeichnet, dass** der Nutzer das Bodenbearbeitungsgerät (1) nach der Anzeige der Teilsequenz manuell fernsteuert.

6. Verfahren nach einem der vorhergehenden Ansprüche, **dadurch gekennzeichnet, dass** auf dem Display (4) mehrere Handlungsoptionen (11) für eine Reaktion auf das Umgebungsereignis und/oder den Gerätezustand angezeigt werden, wobei der Nutzer anschließend mindestens eine Handlungsoption (11) auswählt.

7. Verfahren nach einem der vorhergehenden Ansprüche, **dadurch gekennzeichnet, dass** der Nutzer als Reaktion auf die angezeigte Teilsequenz eine Geräteaktion des Bodenbearbeitungsgerätes (1) steuert, insbesondere eine Fahrbewegung des Bodenbearbeitungsgerätes (1) fernsteuert, einen Sensor des Bodenbearbeitungsgerätes (1) und/oder einen externen Sensor aktiviert und/oder deaktiviert, und/oder eine Bodenbearbeitungseinrichtung (6) des Bodenbearbeitungsgerätes (1) aktiviert, wobei, bevorzugt, während der Ausführung einer Geräteaktion eine Aufnahme mittels der Aufnahmeeinrichtung (2) aufgenommen wird und/oder die Umgebung (3) beleuchtet wird.

8. Verfahren nach einem der vorhergehenden Ansprüche, **dadurch gekennzeichnet, dass** die Aufnahmeeinrichtung (2) Bilder in zeitlichen Abständen von ungefähr 0,1 Sekunde bis 5 Sekunden aufnimmt, wobei die Bilder zu einer Bildfolge zusammengefasst werden, und/oder dass die Aufnahmeeinrichtung (2) ein Video mit einer Bildfrequenz von ungefähr 1 Bild pro Sekunde bis 25 Bildern pro Sekunde aufnimmt.

9. Verfahren nach einem der vorhergehenden Ansprüche, **dadurch gekennzeichnet, dass** die Aufnahme für einen Zeitraum von mindestens 5 Sekunden bis hin zu 60 Sekunden gespeichert wird.

10. Sich selbsttätig fortbewegendes Bodenbearbeitungsgerät (1) mit einer Aufnahmeeinrichtung (2) zum Aufnehmen einer einen Zeitraum betreffenden Aufnahme einer Umgebung (3) des Bodenbearbeitungsgerätes (1) und mit einer Auswerte- und Steuereinrichtung zur Speicherung der Aufnahme, wobei die Auswerte- und Steuereinrichtung ausgebildet ist, im Falle eines definierten Umgebungsereignisses und/oder Gerätezustandes des Bodenbearbeitungsgerätes (1) nachträglich eine zeitlich definierte Teilsequenz aus der Aufnahme der Umgebung (3) zu extrahieren und auf einem Display (4) anzuzeigen, **dadurch gekennzeichnet, dass** die extrahierte Teilsequenz einen bestimmten Zeitabschnitt vor Auftreten eines Fehlerzustandes des Bodenbearbeitungsgerätes (1) enthält, um Informationen darüber zu erlangen, welcher Situation das Bodenbearbeitungsgerät (1) vor einem Fehlerfall ausgesetzt war.

## Claims

1. A method for operating a self-traveling floor treatment apparatus (1), wherein a recording device (2) of the floor treatment apparatus (1) records a recording of an environment (3) of the floor treatment apparatus (1) related to a period, the recording being stored and shown to the user of the floor treatment apparatus (1) on a screen (4), wherein in case of a defined environmental event and/or apparatus condition of the floor treatment apparatus (1), a time-defined partial sequence is subsequently extracted from the stored recording and displayed on the screen (4), **characterized in that** the extracted partial sequence contains a certain time period before an error condition of the floor treatment apparatus (1) occurs in order to obtain information about the situation to which the floor treatment apparatus (1) was exposed before an error occurred.

2. The method according to claim 1, **characterized in that** the defined apparatus condition occurs when the planned progressive motion of the self-traveling floor treatment apparatus is interrupted or stopped.

3. The method according to claim 1 or 2, **characterized in that** the defined environmental event and/or the apparatus condition consists of jamming of the floor treatment apparatus (1) in the environment (3), blocking of a driving wheel of the floor treatment apparatus (1), a battery status below a defined minimum value and/or a faulty software status.

4. The method according to one of the preceding claims, **characterized in that** the partial sequence is displayed on a screen (4) of an external mobile device (5).

5. The method according to one of the preceding claims, **characterized in that** the user remotely controls the floor treatment apparatus (1) manually after the display of the partial sequence.

6. The method according to one of the preceding claims, **characterized in that** multiple options (11) for a reaction to the environmental event and/or the apparatus condition are displayed on the screen (4), wherein the user subsequently selects at least one option (11).

7. The method according to one of the preceding claims, **characterized in that** the user controls an apparatus action of the floor treatment apparatus (1) in reaction to the displayed partial sequence, wherein the user in particular remotely controls a traveling motion of the floor treatment apparatus (1), activates and/or deactivates a sensor of the floor treatment apparatus (1) and/or an external sensor and/or activates a floor treatment element (6) of the floor treatment apparatus (1), and wherein a recording is preferably recorded by means of the recording device (2) and/or the environment (3) is illuminated while an apparatus action is carried out.

8. The method according to one of the preceding claims, **characterized in that** the recording device (2) records images in time intervals of approximately 0.1 to 5 seconds, wherein the images are assembled into an image sequence, and/or that the recording device (2) records a video with an image frequency of approximately 1 image per second to 25 images per second.

9. The method according to one of the preceding claims, **characterized in that** the recording is stored for a time period of at least 5 seconds and up to 60 seconds.

10. A self-traveling floor treatment apparatus (1) with a recording device (2) for recording a recording of an environment (3) of the floor treatment apparatus (1), which concerns a time period, and with an evaluation and control unit for storing the recording, wherein the control and evaluation unit is designed for subsequently extracting a time-defined partial sequence from the recording of the environment (3) and for displaying this partial sequence on a screen (4) in case of a defined environmental event and/or apparatus condition of the floor treatment apparatus (1) **characterized in that** the extracted partial sequence contains a certain time period before an error condition of the floor treatment apparatus (1) occurs in order to obtain information about the situation to which the floor treatment apparatus (1) was exposed before an error occurred.

## Revendications

1. Procédé pour faire fonctionner un appareil de traitement du sol (1) à déplacement automatique, dans lequel un dispositif d'enregistrement (2) de l'appareil de traitement du sol (1) enregistre un enregistrement d'un environnement (3) de l'appareil de traitement du sol (1) qui est relatif à un laps de temps, dans lequel l'enregistrement est stocké et montré sur un écran (4) à un utilisateur de l'appareil de traitement du sol (1), dans lequel une séquence partielle temporellement définie est ensuite extraite de l'enregistrement mémorisé en cas d'événement environnemental et/ou d'état de l'appareil de traitement du sol (1) définis et est affichée sur l'écran (4), **caractérisé en ce que** la séquence partielle extraite contient une période temporelle déterminée avant l'apparition d'un état de défaut de l'appareil de traitement du sol (1) pour obtenir des informations sur la situation à laquelle l'appareil de traitement du sol (1) était exposé avant qu'un défaut ne survienne.

2. Procédé selon la revendication 1, **caractérisée en ce que** l'état d'appareil défini est obtenu si, contrairement au déplacement automatique prévu, une interruption ou une cessation du déplacement se produit.

3. Procédé selon l'une des revendications 1 ou 2, **caractérisé en ce que** l'événement environnemental défini et/ou l'état d'appareil est un coincement de l'appareil de traitement du sol (1) dans l'environnement (3), un blocage d'une roue motrice de l'appareil de traitement du sol (1), un état de batterie inférieur à une valeur minimale définie et/ou un état logiciel de défaut.

4. Procédé selon l'une des revendications précédentes, **caractérisé en ce que** la séquence partielle est affichée sur un écran (4) d'un appareil mobile externe (5).

5. Procédé selon l'une des revendications précédentes, **caractérisé en ce que** l'utilisateur commande manuellement à distance l'appareil de traitement du sol (1) après l'affichage de la séquence partielle.

6. Procédé selon l'une des revendications précédentes, **caractérisé en ce que** plusieurs options d'action (11) pour une réaction à l'événement environnemental et/ou à l'état de l'appareil sont affichées sur l'écran (4), l'utilisateur sélectionnant ensuite au moins une option d'action (11).

7. Procédé selon l'une des revendications précédentes, **caractérisé en ce que** l'utilisateur, en réaction à la séquence partielle affichée, commande une action de l'appareil de traitement du sol (1), en particulier commande à distance un mouvement de conduite de l'appareil de traitement du sol (1), active et/ou désactive un capteur de l'appareil de traitement du sol (1) et/ou un capteur externe, et/ou active un dispositif de traitement du sol (6) de l'appareil de traitement du sol (1), dans lequel, de préférence, pendant l'exécution d'une action de l'appareil, un enregistrement est enregistré au moyen du dispositif d'enregistrement (2) et/ou l'environnement (3) est éclairé.

8. Procédé selon l'une des revendications précédentes, **caractérisé en ce que** le dispositif d'enregistrement (2) enregistre des images à des intervalles de temps d'environ 0,1 seconde à 5 secondes, dans lequel les images sont regroupées pour former une séquence d'images, et/ou **en ce que** le dispositif d'enregistrement (2) enregistre une vidéo avec une fréquence d'images d'environ 1 image par seconde à 25 images par seconde.

9. Procédé selon l'une des revendications précédentes, **caractérisé en ce que** l'enregistrement est stocké pendant une période d'au moins 5 secondes jusqu'à 60 secondes.

10. Appareil de traitement du sol (1) à déplacement automatique, avec un dispositif d'enregistrement (2) pour enregistrer un enregistrement d'un environnement (3) de l'appareil de traitement du sol (1) qui est relatif à un laps de temps et avec un dispositif d'évaluation et de commande pour stocker l'enregistrement, dans lequel le dispositif d'évaluation et de commande est conçu pour, en cas d'événement environnemental et/ou état de l'appareil de traitement du sol (1) défini, extraire ensuite une séquence partielle temporellement définie de l'enregistrement de l'environnement (3) et l'afficher sur un écran (4), **caractérisé en ce que** la séquence partielle extraite contient une période temporelle déterminée avant l'apparition d'un état de défaut de l'appareil de traitement du sol (1) pour obtenir des informations sur la situation à laquelle l'appareil de traitement du sol (1) était exposé avant qu'un défaut ne survienne.
